# EUROPÄISCHE PATENTSCHRIFT

(11) **EP 2 373 737 B1**
(45) Veröffentlichungstag und Bekanntmachung des Hinweises auf die Patenterteilung: **14.05.2014**
(21) Anmeldenummer: 09756515.4
(22) Anmeldetag: 25.11.2009
(51) Int. Cl.: C08L 29/10, C08L 33/02, C08L 35/08, C04B 24/26

(54) **COPOLYMERMISCHUNG ENTHALTENDES DISPERGIERMITTEL**
DISPERSANT COMPRISING A MIXTURE OF COPOLYMERS
AGENT DISPERSANT COMPRENANT UN MÉLANGE DE COPOLYMÈRES

(30) Priorität: 08.12.2008 EP 08170969
(43) Veröffentlichungstag der Anmeldung: 12.10.2011
(73) Patentinhaber: Construction Research & Technology GmbH, 83308 Trostberg (DE)
(72) Erfinder: VIERLE, Mario, 83512 Wasserburg (DE); LORENZ, Klaus, 84539 Zangberg (DE); ALBRECHT, Gerhard, 83209 Prien (DE); SCHOLZ, Christian, 84518 Wald an der Alz (DE); WAGNER, Petra, 83308 Trostberg (DE); WIMMER, Barbara, 83342 Tacherting (DE)
(86) Internationale Anmeldenummer: PCT/EP2009/065787
(87) Internationale Veröffentlichungsnummer: WO 2010/076094

(56) Entgegenhaltungen:
- EP-A1- 0 556 061
- EP-A1- 0 924 174
- WO-A1-00/77058
- WO-A2-2005/075529

## Beschreibung

Die vorliegende Erfindung betrifft eine Polymerkomposition, ein Dispergiermittel, die Herstellung der Polymerkomposition und des Dispergiermittels sowie die Verwendung der Polymerkomposition.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/oder Säurederivatmonomeren mit Polyethermakromonomeren hergestellt werden.

In der WO 2005/075529 werden Copolymere beschrieben, welche neben Säuremonomer-Struktureinheiten als Polyethermakromonomer-Struktureinheiten Vinyloxybutylenpoly(ethylenglykol)-Struktureinheiten aufweisen. Derartige Copolymertypen sind als Hochleistungsfließmittel weit verbreitet, da diese vorzügliche Anwendungseigenschaften aufweisen.

Obwohl die beschriebenen Copolymere als wirtschaftliche Hochleistungsfließmittel anzusehen sind, besteht weiterhin ein Bestreben, die Qualität und die Wirtschaftlichkeit der Copolymere (insbesondere bezüglich Robustheit und Universalität) noch weiter zu verbessern.

Die der vorliegenden Erfindung zugrunde liegende Aufgabe ist es somit, ein wirtschaftliches Dispergiermittel für hydraulische Bindemittel bereitzustellen, welches sich insbesondere gut als Fließmittel für Beton eignet.

Die Lösung dieser Aufgabe ist eine Polymerkomposition enthaltend 5 bis 95 Gew.-% eines Copolymers H sowie 2 bis 60 Gew.-% eines Copolymers K, wobei die Copolymere H und K jeweils Polyethermakromonomerstruktureinheiten und Säuremonomerstruktureinheiten aufweisen, welche in den Copolymeren H und K jeweils in einem molaren Verhältnis von 1 : 20 bis 1 : 1 vorliegen, sowie mindestens 20 Mol-% sämtlicher Struktureinheiten des Copolymers H und mindestens 25 Mol-% sämtlicher Struktureinheiten des Copolymers K jeweils in Form von Säuremonomerstruktureinheiten vorliegen, die Polyethermakromonomerstruktureinheiten des Copolymers H jeweils mindestens 5 Ether-Sauerstoffatome enthaltende Seitenketten aufweisen, wobei die Anzahl der Ether-Sauerstoffatome pro Seitenkette der Polyethermakromonomerstruktureinheiten des Copolymers H derart variiert, dass das entsprechende Häufigkeitsverteilungsdiagramm, in welchem auf der Abszisse die Anzahl der Ether-Sauerstoffatome pro Seitenkette einer Polyethermakromonomerstruktureinheit und auf der Ordinate die zugehörige Häufigkeit für das Copolymer H aufgetragen ist, mindestens 2 Maxima enthält, deren Abszissenwerte mehr als 8 Ether-Sauerstoffatome voneinander abweichen, sämtliche Polyethermakromonomerstruktureinheiten des Copolymers K entweder Seitenketten mit einer hohen Anzahl an Ether-Sauerstoffatomen oder alternativ Seitenketten mit einer geringen Anzahl an Ether-Sauerstoffatomen aufweisen, wobei Seitenketten mit einer hohen Anzahl von Ether-Sauerstoffatomen solche Seitenketten sind, die jeweils mehr Ether-Sauerstoffatome aufweisen als die Summe aus der arithmetisch mittleren Anzahl der Ether-Sauerstoffatome pro Seitenkette der Polyethermakromonomerstruktureinheiten des Copolymers H und der Zahl 4, sowie Seitenketten mit einer niedrigen Anzahl an Ether-Sauerstoffatomen solche Seitenketten sind, welche jeweils weniger Ether-Sauerstoffatome aufweisen als die Differenz aus der arithmetisch mittleren Anzahl der Ether-Sauerstoffatome pro Seitenkette der Polyethermakromonomerstruktureinheiten des Copolymers H und der Zahl 4.

Die Säuremonomerstruktureinheiten werden durch Einpolymerisation der entsprechenden Säuremonomere erzeugt. In diesem Zusammenhang sollen als Säuremonomer radikalisch copolymerisierbare, mindestens eine Kohlenstoffdoppelbindung aufweisende Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisende Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat). Die Polyethermakromonomerstruktureinheiten werden durch Einpolymerisation der entsprechenden Polyethermakromonomere erzeugt. In diesem Zusammenhang sind Polyethermakromonomere im Sinne der vorliegenden Erfindung radikalisch copolymerisierbare Verbindungen mit mindestens einer Kohlenstoffdoppelbindung, welche Ether-Sauerstoffatome aufweisen. Die in dem Copolymer enthaltenen Polyethermakromonomerstruktureinheiten weisen somit jeweils mindestens eine Seitenkette auf, die Ether-Sauerstoffatome enthält.

Allgemein kann gesagt werden, dass die Wirkungsweise von relevanten Polyethermakromonomerstruktureinheiten sowie Säurestruktureinheiten aufweisenden Copolymeren von deren strukturellen Parametern bestimmt wird. Das Wirkungsspektrum von entsprechenden Hochleistungscopolymeren deckt die gesamte Bandbreite von extremer Wasserreduktion bis zu extremer Konsistenzhaltung ab, wobei strukturelle Parameter, die für Wasserreduktion sorgen, einem guten Slumperhalt entgegenstehen. So ist neben der Ladungsmenge pro Masseneinheit auch die Länge der Seitenketten, z.B. bezüglich der Wasserreduktionsfähigkeit, ausschlaggebend. Die Dosierung der relevanten Fließmittelcopolymere wird üblicherweise in % des Zementgewichts einer zementären Mischung - also massenbasiert - vorgenommen. In aller Regel ist für die Wirkungsweise nicht nur die applizierte Masse, sondern auch die Anzahl der Wirkstoffmoleküle maßgeblich. Lange Seitenketten verfügen jedoch über eine hohe Masse, was einer möglichst großen Anzahl an Copolymer-Molekülen pro Masse zuwiderläuft. Durch gezielten Einbau von kurzen Seitenketten neben langen Seitenketten kann die molare Masse der Copolymere verringert werden, ohne jedoch den durch die langen Seitenketten hervorgerufenen Dispergiereffekt negativ zu beeinflussen. Somit ist es häufig zweckmäßig, kurze und lange Polyetherseitenketten jeweils zusammen im Copolymer-Molekül einzubauen und zwar nach dem Prinzip "jeweils so viele der längeren wie nötig, aber so wenige wie möglich". Copolymerfließmittel können hinsichtlich ihrer Masseneffizienz auf diese Weise optimiert werden. Diese Optimierung kann separat für beide Extreme des Wirkspektrums (Wasserreduktion, Konsistenzhaltung) durchgeführt werden. In Anwendungen, in denen sowohl Wasserreduktion als auch Konsistenzhaltung gefordert sind, kann eine physikalische Mischung dieser jeweils massenoptimierten Fließmittelcopolymere mit Copolymeren, die entweder nur kurze oder lange Seitenketten aufweisen vorteilhaft sein. Vorteile sind eine größere Robustheit gegenüber Zementqualität (Alkali- und Sulfatgehalt), Temperaturschwankungen, bzw. die Möglichkeit der leichten Anpassung der Mischung. Die erfindungsgemäße Polymerkomposition betrifft vereinfacht gesagt eine Abmischung eines gemischte Seitenketten aufweisenden Copolymers mit einem anderen Copolymer, welches entweder nur lange oder nur kurze Seitenketten aufweist. Lange Polyetherseitenketten bewirken zwar eine hohe Dispergierwirkung, führen jedoch bei hoher Wasserreduktion eine hohe Zähigkeit in den Beton ein (welche meist nicht erwünscht ist), wobei kurze Polyetherseitenketten eine weitaus geringere Zähigkeit einführen. Für die jeweilige praktische Anwendung ist häufig ein "Kompromiss" bezüglich der Wahl von kurzen und langen Seitenketten optimal, wobei Mischungen aus kurzen und langen Seitenketten häufig gute Ergebnisse liefern. Die vorliegende Erfindung verwirklicht, wie derartige Mischungen effektiv bereitgestellt werden: Das gemischte Seitenketten aufweisende Copolymer wird häufig als eine Art Standard in größeren Mengen bereitgestellt und mit einer verhältnismäßig geringen Menge eines entweder kurzkettigen oder langkettigen Copolymers abgemischt, so dass ein gewünschtes Wirkungsprofil erzielt wird. Damit ist u.a. auch der Vorteil verbunden, dass verhältnismäßig wenig Lager- und Mischaufwand erforderlich ist, um das gewünschte Anwendungsprofil zu erreichen.

Normalerweise enthält die Polymerkomposition 15 bis 80 Gew.-% eines Copolymers H sowie 5 bis 40 Gew.-% eines Copolymers K.

In der Regel liegen mindestens 50 Mol-% sämtlicher Struktureinheiten des Copolymers H und mindestens 50 Mol-% sämtlicher Struktureinheiten des Copolymers K jeweils in Form von Säuremonomerstruktureinheiten vor.

Häufig variiert die Anzahl der Ether-Sauerstoffatome pro Seitenkette der Polyethermakromonomerstruktureinheiten des Copolymers H derart, dass das entsprechende Häufigkeitsverteilungsdiagramm, in welchem auf der Abszisse die Anzahl der Ether-Sauerstoffatome pro Seitenkette einer Polyethermakromonomerstruktureinheit und auf der Ordinate die zugehörige Häufigkeit für das Copolymer H aufgetragen ist, mindestens 2 Maxima enthält, deren Abszissenwerte mehr als 10 Ether-Sauerstoffatome voneinander abweichen.

Die Anzahl der Ether-Sauerstoffatome pro Seitenkette der Polyethermakromonomerstruktureinheiten des Copolymers H variiert in vielen Ausführungsformen derart, dass das entsprechende Häufigkeitsverteilungsdiagramm, in welchem auf der Abszisse die Anzahl der Ether-Sauerstoffatome pro Seitenkette einer Polyethermakromonomerstruktureinheit und auf der Ordinate die zugehörige Häufigkeit für das Copolymer H aufgetragen ist, mindestens 2 Maxima enthält, deren Abszissenwerte mehr als 10 Ether-Sauerstoffatome voneinander abweichen, wobei sämtliche Polyethermakromonomerstruktureinheiten des Copolymers K entweder Seitenketten mit einer hohen Anzahl an Ether-Sauerstoffatomen oder alternativ Seitenketten mit einer geringen Anzahl an Ether-Sauerstoffatomen aufweisen, wobei Seitenketten mit einer hohen Anzahl von Ether-Sauerstoffatomen solche Seitenketten sind, die jeweils mehr Ether-Sauerstoffatome aufweisen als die Summe aus der arithmetisch mittleren Anzahl der Ether-Sauerstoffatome pro Seitenkette der Polyethermakromonomerstruktureinheiten des Copolymers H und der Zahl 10, sowie Seitenketten mit einer niedrigen Anzahl an Ether-Sauerstoffatomen solche Seitenketten sind, welche jeweils weniger Ether-Sauerstoffatome aufweisen als die Differenz aus der arithmetisch mittleren Anzahl der Ether-Sauerstoffatome pro Seitenkette der Polyethermakromonomerstruktureinheiten des Copolymers H und der Zahl 10.

Bevorzugt liegen die Säuremonomerstruktureinheiten der Copolymere H und K jeweils gemäß einer der allgemeinen Formeln (la), (Ib), (Ic) und/oder (Id) vor 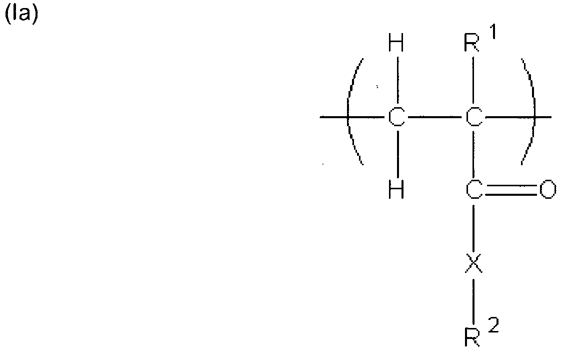 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 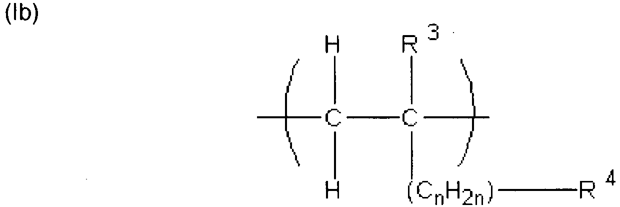
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 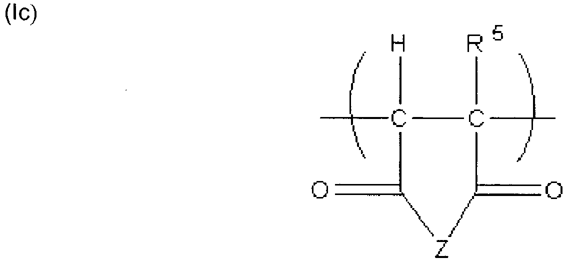
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 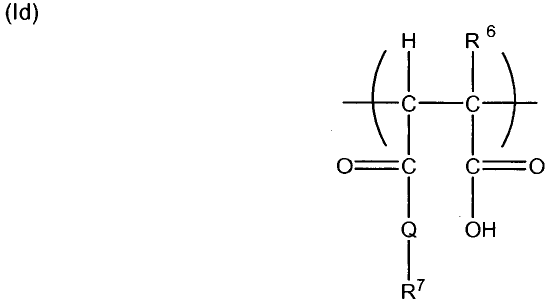
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

In der Regel werden die Säuremonomerstruktureinheiten der Copolymere H und K jeweils durch Einpolymerisation der Säuremonomere Methacrylsäure, Acrylsäure, Maleinsäure, Maleinsäureanhydrid und/oder Halbester der Maleinsäure erzeugt.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Meist liegen die Polyethermakromonomerstruktureinheiten der Copolymere H und K jeweils gemäß einer der allgemeinen Formeln (IIa), (IIb) und/oder (IIc) vor 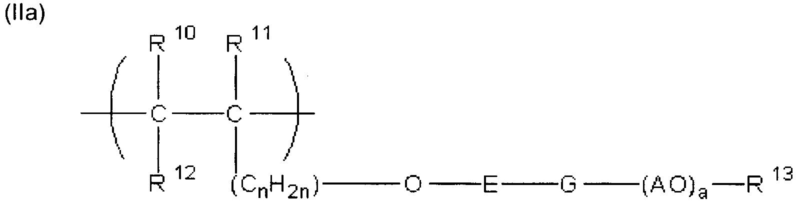 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 5 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 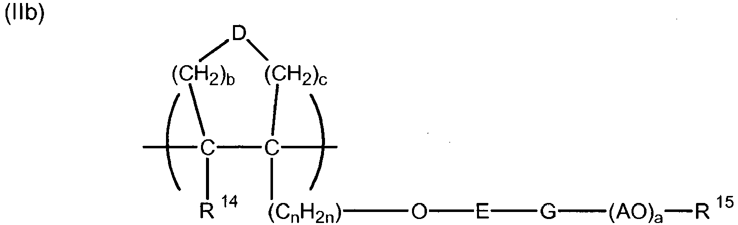
mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 5 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 o-der 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 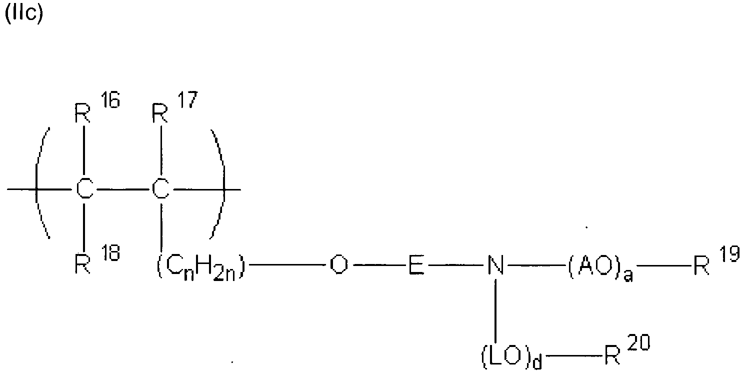
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 5 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Typischerweise werden die Polyethermakromonomerstruktureinheiten der Copolymere H und K jeweils durch Einpolymerisation der Polyethermakromonomere alkoxylierter Hydroxybutylvinylether und/oder alkoxylierter Diethylenglykolmonovinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 6 bis 300 erzeugt.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung bzw. Propoxylierung der entsprechenden Monomeralkohole).

Die Copolymere H und K können jeweils die gleichen oder verschiedene Typen von Polyethermakromonomerstruktureinheiten und/oder Säuremonomerstruktureinheiten aufweisen.

Meist werden jeweils mindestens 45 Mol-%, bevorzugt mindestens 80 Mol-% aller Struktureinheiten der Copolymere H und K durch Einpolymerisieren von Säuremonomer und Polyethermakromonomer erzeugt.

Weiterhin betrifft die Erfindung auch ein Dispergiermittel enthaltend mindestens 30 Gew.-% Wasser sowie mindestens 10 Gew.-% der vorstehend beschriebenen Polymerkomposition.

Das Dispergiermittel liegt bevorzugt in Form einer wässrigen Lösung vor.

Die Erfindung betrifft auch ein Verfahren zur Herstellung der vorstehend beschriebenen Polymerkomposition und des vorstehend beschriebenen Dispergiermittels, in welchem die Copolymere H und K jeweils getrennt voneinander in wässriger Lösung hergestellt werden und anschließend die getrennt hergestellten Copolymere oder die getrennt hergestellten wässrigen Lösungen miteinander vermischt werden. In der Regel werden Säuremonomer und Polyethermakromonomer durch radikalische Polymerisation unter Verwendung eines Peroxid enthaltenden Redoxinitiatorsystems in wässrigen Lösung umgesetzt, wobei die Temperatur der wässrigen Lösung während der Polymerisation 10 bis 45 °C sowie der pH-Wert 3,5 bis 6,5 beträgt.

Schließlich betrifft die Erfindung auch die Verwendung der vorstehend beschriebenen Polymerkomposition als Dispergiermittel für hydraulische Bindemittel und/oder für latenthydraulische Bindemittel. Die erfindungsgemäße Polymerkomposition kann beispielsweise auch (insbesondere in entwässerter Form) als Additiv für die Zementproduktion (Mahlhilfe und "Wasserreduzierer" für reine Portlandzemente bzw. Kompositzemente) eingesetzt werden.

Im Folgenden soll die Erfindung anhand von Ausführungsbeispielen näher erläutert werden.

### Synthesebeispiel 1

In einem Glasreaktor - ausgestattet mit Rührer, pH-Elektrode und mehreren Zulaufeinrichtungen - wurden 250,0 g deionisiertes Wasser und 330,0 g Vinyloxybutylpolyethylenglykol-1100 (Anlagerungsprodukt aus 22 Mol Ethylenoxid an 4-Hydroxybutyl-1-monovinylether) vorgelegt und auf eine Temperatur von 15 °C gekühlt.

In einem separaten Zulaufgefäß wurden unter Kühlem 64,9 g Acrylsäure und 34,3 g 40 %ige Kaliumhydroxydlösung mit 187,4 g deionisiertem Wasser homogen vermischt. Anschließend wurden 2,43 g 3-Mercaptopropionsäure zugegeben (Lösung A).

Parallel wurde eine 3 %ige Lösung von Brüggolit® FF6 (Handelsprodukt der Fa. Brüggemann GmbH) in Wasser hergestellt (Lösung B).

Unter Rühren und Kühlen wurden 107,8 g der Lösung A sowie anschließend 17,4 g einer 20 %igen wässrigen Natronlauge und 0,61 g 3-Mercaptopropionsäure zur Vorlage gegeben.

Danach wurden 0,093 g Eisen-II-sulfat-Heptahydrat zur Vorlage zugegeben und die Reaktion durch Zugabe von 5,74 g Wasserstoffperoxid (30 % in Wasser) zum Vorlagegemisch gestartet. Zeitgleich wurde mit der Zugabe von Lösung A und Lösung B zur gerührten Vorlage begonnen.

Die Dosierrate der restlichen Lösung A ist dem folgenden Dosierprofil zu entnehmen.

| | | | | | | | | | | | | |
|---|---|---|---|---|---|---|---|---|---|---|---|---|
| t (min) | 0 | 1,5 | 3 | 6 | 9 | 12 | 15 | 18 | 21 | 24 | 27 | 30 |
| Lösung A (g/h) | 131 | 261 | 457 | 547 | 509 | 457 | 392 | 314 | 248 | 193 | 155 | 116 |
| t (min) | 33 | 36 | 39 | 45 | | | | | | | | |
| Lösung A (g/h) | 94 | 65 | 57 | 0 | | | | | | | | |

Lösung B wurde während der Dosierung von Lösung A mit einer Dosierrate von konstant 37 g/h dosiert und nach Ende der Dosierung von Lösung A bis zur Peroxidfreiheit der Reaktionsmischung weiterdosiert.

Während der Reaktionszeit wurde bei Bedarf schrittweise 20 %ige wässrige Natronlauge zugegeben um den pH Wert bei mindestes 5,65 zu halten.

Anschließend wurde die erhaltene Polymerlösung mit 20 %iger NatriumhydroxidLösung auf einen pH-Wert von 6,5 eingestellt.

Das erhaltene Copolymer fiel in einer leicht gelblich gefärbten Lösung an, die einen Feststoffgehalt von 39,0 % aufwies. Das Gewichtsmittel der Molmasse des Copolymers lag bei 39000 g/Mol; Gesamtumsatz (bestimmt mittels GPC) 94 %.

### Synthesebeispiel 2:

In einem Glasreaktor - ausgestattet mit Rührer, pH-Elektrode und mehreren Zulaufeinrichtungen - wurden 208,0 g deionisiertes Wasser und 229,2 g Vinyloxybutylpolyethylenglykol-1100 (Anlagerungsprodukt aus 22 Mol Ethylenoxid an 4-Hydroxybutyl-1-monovinylether) und 104,2 g Vinyloxybutylpolyethylenglykol-500 (Anlagerungsprodukt aus 10 Mol Ethylenoxid an 4-Hydroxybutyl-1-monovinylether) vorgelegt und auf 12 °C gekühlt (Vorlage).

In einem separaten Zulaufgefäß wurden unter Kühlen 33,1 g Acrylsäure, 26,1 g 2-Hydroxypropylacrylat und 19,6 g einer 40 %igen Kaliumhydroxydlösung mit 180,4 g deionisiertem Wasser homogen vermischt. Anschließend wurden 2,64 g 3-Mercaptopropionsäure zugegeben (Lösung A).

Parallel wurde eine 3 %ige Lösung von Brüggolit® FF6 (Handelsprodukt der Fa. Brüggemann GmbH) in Wasser hergestellt. (Lösung B).

Unter Rühren und Kühlen wurden 78,0 g der Lösung A, 0,6 g einer 25 %-igen wässrigen Schwefelsäure sowie 1,4 g 3-Mercaptopropionsäure zur Vorlage gegeben.

Nach Erreichen dieses pH-Wertes wurden 0,078 g Eisen-II-sulfat-Heptahydrat zugegeben und die Reaktion durch Zugabe von 4,8 g Wasserstoffperoxid (30 % in Wasser) gestartet. Zeitgleich wurde mit der Zugabe von Lösung A und Lösung B zur gerührten Vorlage begonnen.

Die Zugabegeschwindigkeit der restlichen Lösung A ist dem folgenden Dosierprofils zu entnehmen.

| | | | | | | | | | | | | |
|---|---|---|---|---|---|---|---|---|---|---|---|---|
| t(min) | 0 | 1,5 | 3 | 6 | 9 | 12 | 15 | 18 | 21 | 24 | 27 | 30 |
| Lösung A (g/h) | 125 | 250 | 437 | 523 | 487 | 437 | 374 | 299 | 237 | 185 | 148 | 111 |
| t (min) | 33 | 36 | 39 | 45 | | | | | | | | |
| Lösung A (g/h) | 90 | 62 | 55 | 0 | | | | | | | | |

Lösung B wurde während der Dosierung von Lösung A mit einer Dosierrate von konstant 31 g/h dosiert und nach Ende der Dosierung von Lösung A bis zur Peroxidfreiheit der Reaktionsmischung weiterdosiert.

Während der Reaktionszeit wurden schrittweise 7,6 g einer 20 %igen wässrigen Natronlauge zugegeben um den pH Wert bei mindestens 5,7 zu halten.

Anschließend wurde die erhaltene Polymerlösung mit etwa 20 %iger NatriumhydroxidLösung auf einen pH-Wert von 6,5 eingestellt.

Das erhaltene Copolymer fiel in einer leicht gelblich gefärbten Lösung an, die einen Feststoffgehalt von 45,0 % aufwies. Das Gewichtsmittel der Molmasse des Copolymers lag bei 27000 g/Mol; Gesamtumsatz (bestimmt mittels GPC): 98 %.

Die Anwendungseigenschaften der Copolymere sollten durch die nachfolgenden Anwendungsbeispiele verdeutlicht werden.

### Anwendungsbeispiele

Als Anwendungsbeispiel wurde bewusst ein selbstverdichtender Beton (im folgenden SVB genant) gewählt, da diese Betonart durch den Wegfall des Vibrierens in den letzten Jahren enorm an Bedeutung gewonnen hat. Fließmittel für selbstverdichtenden Beton müssen besonders robust und anpassungsfähig sein, da z.B. im Falle eines verfrühten Konsistenzverlustes die Fließfähigkeit des Betons stark herabgesetzt wird und somit die gleichmäßige Ausfüllung der Betonschalung nicht mehr gewährleistet sein kann.

Der SVB wurde nach folgenden Mengenverhältnissen hergestellt:

| Komponente | Menge / kg/m³ |
|---|---|
| Zement CEM I 52,5 R | 310 |
| Kalksteinmehl | 218 |
| Sand 0 - 4 mm | 670 |
| Kies 4 - 16 mm | 970 |
| Wasser | 189 |
| Fließmittel | n. Bedarf |

In einem Zwangsmischer wurden alle trockenen Komponenten 30 Sekunden vorgemischt, anschließend das Wasser sowie das Fließmittel zugegeben und 4 Minuten gemischt. Die Bestimmung der Frischbetoneigenschaften über die Zeit erfolgte durch die Ermittlung des Setzfließmaßes ohne Blockierring.

Im Folgenden soll zunächst die besondere Robustheit der Polymerkomposition gegenüber der Verwendung von Zementen Typ I 52,5R unterschiedlicher Hersteller dargelegt werden. Die Betone wurden unter Verwendung von zwei Zementen des Typs CEM I 52,5R unterschiedlicher Hersteller nach oben beschriebener Verfahrensweise hergestellt.

| Zement CEM I 52,5R von Hersteller | Polymerkomposition¹ | Dosierung² | Setzfließmaß in cm | | |
|---|---|---|---|---|---|
| | | | 0 min | 60 min | 90 min |
| 1 | A1 | 0,20 % | 71 | 61 | 51 |
| 2 | A1 | 0,68 % | 70 | 71 | 71 |
| 1 | B1 | 0,27 % | 71 | 71 | 70 |
| 2 | B1 | 0,35 % | 70 | 70 | 70 |

| | | | | | |
|---|---|---|---|---|---|
| ¹ Polymer A1: Vergleichsbeispiel mit Hochleistungsverflüssiger Glenium® 27 (Handelsprodukt der Fa. BASF SE); Polymer B1: physikalische Abmischung aus Polymer nach Synthesebeispiel 1 und Polymer nach Synthesebeispiel 2, Mischungsverhältnis (Menge) 1:2; ² Dosierungsangabe in Massenprozent Polymerfeststoff bezogen auf die Zementeinwaage | | | | | |

Anhand obiger Beispiele wird deutlich, dass die Dosiermenge von Polymer A1 sehr stark von der Art des verwendeten Zementes abhängt. So kann bei Verwendung von Zement 1 mit einer wirtschaftlichen Dosierung ein gutes Anfangssetzmaß erhalten werden, jedoch ist der Konsistenzverlust über 90 Minuten deutlich ausgeprägt. Bei Verwendung von Zement 2 kann zwar sowohl ein gutes Anfangssetzmaß als auch eine gute Konsistenzhaltung erzielt werden, jedoch muss hierzu eine extrem hohe Menge an Fließmittel dosiert werden (340 % im Vergleich zu Beton mit Zement 1).

Im Falle der erfindungsgemäßen Polymerkomposition B1 kann sowohl unter Verwendung von Zement 1 als auch von Zement 2 ein gutes Anfangssetzmaß sowie eine optimale Konsistenzhaltung erzielt werden. Besonders hervorzuheben sind die im Vergleich zu den Anwendungsbeispielen mit Polymer A1 sehr niedrigen Unterschiede in den erforderlichen Dosiermenge (Zement 2: 130 % im Vergleich zu Beton mit Zement 1). Dies bedeutet eine hohe Wirtschaftlichkeit der Polymermischung und große Flexibilität gegenüber unterschiedlichen Zementen.

Besonders die fortschreitende Reduktion der CO₂-Emissionen bei der Zementproduktion durch die Verwendung von Sekundärbrennstoffen als auch natürlich bedingte Schwankungen der Klinkerzusammensetzung bedingen häufig Schwankungen der Zementqualität. Die erfindungsgemäßen Polymermischungen erlauben auch eine schnelle und einfache Anpassung an diese Qualitätsschwankungen. Im Folgenden soll dies deutlich verdeutlich werden.

Anhand der zuvor beschriebenen Betonrezeptur wurden verschiedene SVB mit unterschiedlichen Produktionschargen des Zements von Hersteller 1 hergestellt und die Anwendungseigenschaften bestimmt:

| Zement CEM I 52,5R von Hersteller 1, Charge | Polymerkomposition¹ | Dosierung² | Setzfließmaß in cm | | |
|---|---|---|---|---|---|
| | | | 0 min | 60 min | 90 min |
| 1 | B1 | 0,27 % | 71 | 71 | 70 |
| 2 | B1 | 0,27 % | > 75cm, Segregation | | |
| 2 | B1 | 0,25 % | > 75 cm, Segregation | | |
| 2 | B2 | 0,25 % | 71 | 69 | 69 |

| | | | | | |
|---|---|---|---|---|---|
| ¹ Polymer B1: physikalische Abmischung aus Polymer nach Synthesebeispiel 1 und Polymer nach Synthesebeispiel 2, Mischungsverhältnis (Menge) 1 : 2; Polymer B2: physikalische Abmischung aus Polymer nach Synthesebeispiel 1 und Polymer nach Synthesebeispiel 2, Mischungsverhältnis (Menge) 0,9 : 2,1; ² Dosierungsangabe in Massenprozent Polymerfeststoff bezogen auf die Zementeinwaage | | | | | |

Bei identischer Dosierung von Polymerkomposition B1 ist der Beton mit Zementcharge 2 stark segregiert, ebenso nach einem Absenken der Polymerdosierung. Durch geringfügiges Anpassen der Mischungsverhältnisse der Polymere nach Synthesebeispiel 1 und 2 (resultierend: Polymerkomposition B2) kann wieder ein gutes Setzfließmaß und eine optimale Konsistenzhaltung erzielt werden. Dies wäre bei Verwendung von nur ein Polymer enthaltendem Fließmittel nicht möglich. Es könnte zwar durch Herabsetzen der Dosierung ein gutes Anfangssetzmaß erzielt werden, jedoch würde dies mit einem fortschreitende Konsistenzverlust über die Zeit einhergehen.

Die Anwendungsbeispiele verdeutlichen also die besondere Wirtschaftlichkeit der erfindungsgemäßen Polymerkomposition.

## Patentansprüche

1. Polymerkomposition enthaltend 5 bis 95 Gew.-% eines Copolymers H sowie 2 bis 60 Gew.-% eines Copolymers K, wobei die Copolymere H und K jeweils Polyethermakromonomerstruktureinheiten und Säuremonomerstruktureinheiten aufweisen, welche in den Copolymeren H und K jeweils in einem molaren Verhältnis von 1 : 20 bis 1 : 1 vorliegen, sowie mindestens 20 Mol-% sämtlicher Struktureinheiten des Copolymers H und mindestens 25 Mol-% sämtlicher Struktureinheiten des Copolymers K jeweils in Form von Säuremonomerstruktureinheiten vorliegen, die Polyethermakromonomerstruktureinheiten des Copolymers H jeweils mindestens 5 Ether-Sauerstoffatome enthaltende Seitenketten aufweisen, wobei die Anzahl der Ether-Sauerstoffatome pro Seitenkette der Polyethermakromonomerstruktureinheiten des Copolymers H derart variiert, dass das entsprechende Häufigkeitsverteilungsdiagramm, in welchem auf der Abszisse die Anzahl der Ether-Sauerstoffatome pro Seitenkette einer Polyethermakromonomerstruktureinheit und auf der Ordinate die zugehörige Häufigkeit für das Copolymer H aufgetragen ist, mindestens 2 Maxima enthält, deren Abszissenwerte mehr als 8 Ether-Sauerstoffatome voneinander abweichen, sämtliche Polyethermakromonomerstruktureinheiten des Copolymers K entweder Seitenketten mit einer hohen Anzahl an Ether-Sauerstoffatomen oder alternativ Seitenketten mit einer geringen Anzahl an Ether-Sauerstoffatomen aufweisen, wobei Seitenketten mit einer hohen Anzahl von Ether-Sauerstoffatomen solche Seitenketten sind, die jeweils mehr Ether-Sauerstoffatome aufweisen als die Summe aus der arithmetisch mittleren Anzahl der Ether-Sauerstoffatome pro Seitenkette der Polyethermakromonomerstruktureinheiten des Copolymers H und der Zahl 4, sowie Seitenketten mit einer niedrigen Anzahl an Ether-Sauerstoffatomen solche Seitenketten sind, welche jeweils weniger Ether-Sauerstoffatome aufweisen als die Differenz aus der arithmetisch mittleren Anzahl der Ether-Sauerstoffatome pro Seitenkette der Polyethermakromonomerstruktureinheiten des Copolymers H und der Zahl 4.

2. Polymerkomposition nach Anspruch 1, enthaltend 15 bis 80 Gew.-% eines Copolymers H sowie 5 bis 40 Gew.-% eines Copolymers K.

3. Polymerkomposition nach Anspruch 1 oder 2, **dadurch gekennzeichnet, dass** mindestens 50 Mol-% sämtlicher Struktureinheiten des Copolymers H und mindestens 50 Mol-% sämtlicher Struktureinheiten des Copolymers K jeweils in Form von Säuremonomerstruktureinheiten vorliegen.

4. Polymerkomposition nach einem der Ansprüche 1 bis 3, **dadurch gekennzeichnet**, die Anzahl der Ether-Sauerstoffatome pro Seitenkette der Polyethermakromonomerstruktureinheiten des Copolymers H derart variiert, dass das entsprechende Häufigkeitsverteilungsdiagramm, in welchem auf der Abszisse die Anzahl der Ether-Sauerstoffatome pro Seitenkette einer Polyethermakromonomerstruktureinheit und auf der Ordinate die zugehörige Häufigkeit für das Copolymer H aufgetragen ist, mindestens 2 Maxima enthält, deren Abszissenwerte mehr als 10 Ether-Sauerstoffatome voneinander abweichen.

5. Polymerkomposition nach einem der Ansprüche 1 bis 4, **dadurch gekennzeichnet, dass** die Anzahl der Ether-Sauerstoffatome pro Seitenkette der Polyethermakromonomerstruktureinheiten des Copolymers H derart variiert, dass das entsprechende Häufigkeitsverteilungsdiagramm, in welchem auf der Abszisse die Anzahl der Ether-Sauerstoffatome pro Seitenkette einer Polyethermakromonomerstruktureinheit und auf der Ordinate die zugehörige Häufigkeit für das Copolymer H aufgetragen ist, mindestens 2 Maxima enthält, deren Abszissenwerte mehr als 10 Ether-Sauerstoffatome voneinander abweichen, sämtliche Polyethermakromonomerstruktureinheiten des Copolymers K entweder Seitenketten mit einer hohen Anzahl an Ether-Sauerstoffatomen oder alternativ Seitenketten mit einer geringen Anzahl an Ether-Sauerstoffatomen aufweisen, wobei Seitenketten mit einer hohen Anzahl von Ether-Sauerstoffatomen solche Seitenketten sind, die jeweils mehr Ether-Sauerstoffatome aufweisen als die Summe aus der arithmetisch mittleren Anzahl der Ether-Sauerstoffatome pro Seitenkette der Polyethermakromonomerstruktureinheiten des Copolymers H und der Zahl 10, sowie Seitenketten mit einer niedrigen Anzahl an Ether-Sauerstoffatomen solche Seitenketten sind, welche jeweils weniger Ether-Sauerstoffatome aufweisen als die Differenz aus der arithmetisch mittleren Anzahl der Ether-Sauerstoffatome pro Seitenkette der Polyethermakromonomerstruktureinheiten des Copolymers H und der Zahl 10.

6. Polymerkomposition nach einem der Ansprüche 1 bis 5, **dadurch gekennzeichnet, dass** die Säuremonomerstruktureinheiten der Copolymere H und K jeweils gemäß einer der allgemeinen Formeln (la), (Ib), (Ic) und/oder (Id) vorliegen 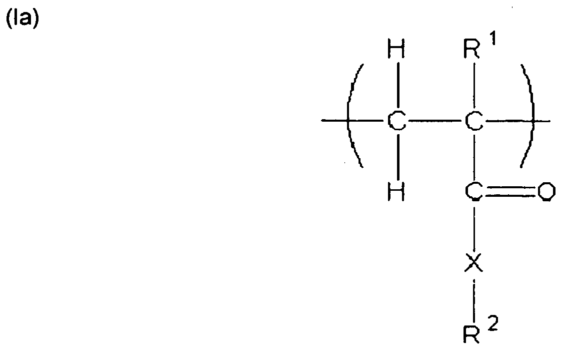 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 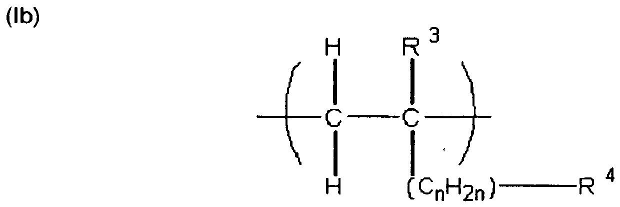
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 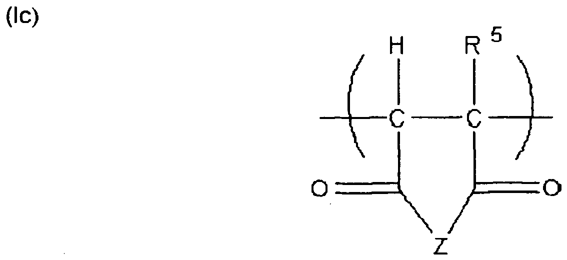
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 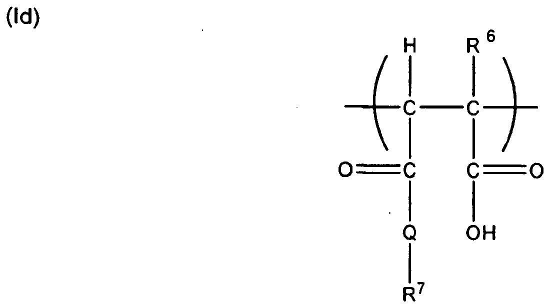
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

7. Polymerkomposition nach einem der Ansprüche 1 bis 6, **dadurch gekennzeichnet, dass** die Säuremonomerstruktureinheiten der Copolymere H und K jeweils durch Einpolymerisation der Säuremonomere Methacrylsäure, Acrylsäure, Maleinsäure, Maleinsäureanhydrid und/oder Halbester der Maleinsäure erzeugt werden.

8. Polymerkomposition nach einem der Ansprüche 1 bis 7, **dadurch gekennzeichnet, dass** die Polyethermakromonomerstruktureinheiten der Copolymere H und K jeweils gemäß einer der allgemeinen Formeln (IIa), (IIb) und/oder (IIc) vorliegen 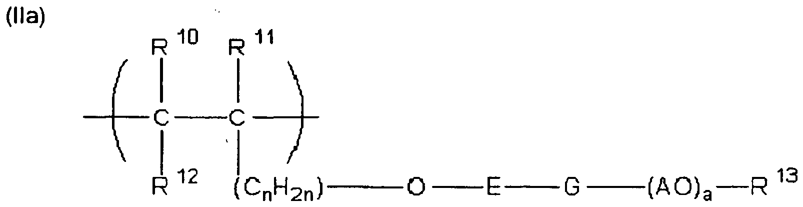 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5, bevorzugt x = 2, und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 5 bis 350, bevorzugt 10 - 200;
R¹³ gleich oder verschieden sowie repräsentiert durch H, eine unverzweigte oder verzweigte C₁ - C₄ Alkylgruppe, CO-NH₂, und/oder COCH₃; 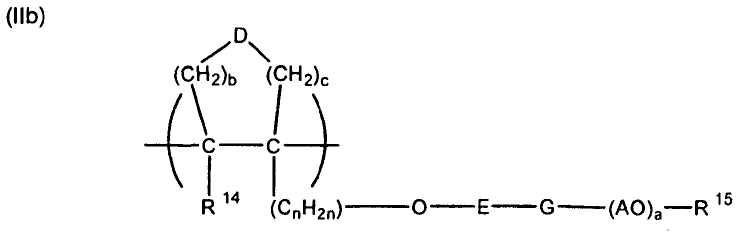
mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 5 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 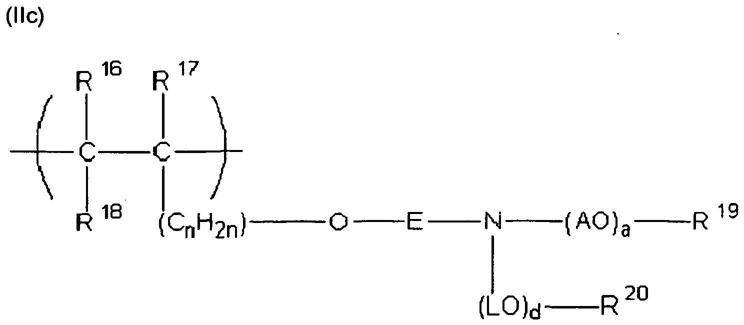
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 5 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

9. Polymerkomposition nach einem der Ansprüche 1 bis 8, **dadurch gekennzeichnet, dass** die Polyethermakromonomerstruktureinheiten der Copolymere H und K jeweils durch Einpolymerisation der Polyethermakromonomere alkoxylierter Hydroxybutylvinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 6 bis 300 erzeugt werden.

10. Polymerkomposition nach einem der Ansprüche 1 bis 9, **dadurch gekennzeichnet, dass** die Copolymere H und K jeweils die gleichen oder verschiedene Typen von Polyethermakromonomerstruktureinheiten und/oder Säuremonomerstruktureinheiten aufweisen.

11. Polymerkomposition nach einem der Ansprüche 1, 2 oder 4 bis 10, **dadurch gekennzeichnet, dass** jeweils mindestens 45 Mol-%, bevorzugt mindestens 80 Mol-% aller Struktureinheiten der Copolymere H und K durch Einpolymerisieren von Säuremonomer und Polyethermakromonomer erzeugt werden.

12. Dispergiermittel enthaltend mindestens 30 Gew.-% Wasser sowie mindestens 10 Gew.-% der Polymerkomposition gemäß einem der Ansprüche 1 bis 11.

13. Dispergiermittel nach Anspruch 12, welches in Form einer wässrigen Lösung vorliegt.

14. Verfahren zur Herstellung einer Polymerkomposition gemäß einem der Ansprüche 1 bis 11 oder eines Dispergiermittels gemäß Anspruch 12 oder 13, **dadurch gekennzeichnet, dass** die Copolymere H und K jeweils getrennt voneinander in wässriger Lösung hergestellt werden und anschließend die getrennt hergestellten Copolymere oder die getrennt hergestellten wässrigen Lösungen miteinander vermischt werden.

15. Verfahren nach Anspruch 14, **dadurch gekennzeichnet, dass** Säuremonomer und Polyethermakromonomer durch radikalische Polymerisation unter Verwendung eines Peroxid enthaltenden Redoxinitiatorsystems in wässrigen Lösung umgesetzt werden, wobei die Temperatur der wässrigen Lösung während der Polymerisation 10 bis 45 °C sowie der pH-Wert 3,5 bis 6,5 beträgt.

16. Verwendung einer Polymerkomposition gemäß einem der Ansprüche 1 bis 11 als Dispergiermittel für hydraulische Bindemittel und/oder für latenthydraulische Bindemittel.

## Claims

1. Polymer composition containing 5 to 95% by weight of a copolymer H and 2 to 60% by weight of a copolymer K, the copolymers H and K each having polyether macromonomer structural units and acid monomer structural units, which are present in the copolymers H and K in each case in a molar ratio of 1:20 to 1:1, and at least 20 mol% of all structural units of the copolymer H and at least 25 mol% of all structural units of the copolymer K being present in each case in the form of acid monomer structural units, the polyether macromonomer structural units of the copolymer H having side chains containing in each case at least 5 ether oxygen atoms, the number of ether oxygen atoms per side chain of the polyether macromonomer structural units of the copolymer H varying in such a way that the corresponding frequency distribution diagram, in which the number of ether oxygen atoms per side chain of a polyether macromonomer structural unit is plotted along the abscissa and the associated frequency for the copolymer H is plotted along the ordinate, contains at least 2 maxima whose abscissa values differ by more than 8 ether oxygen atoms from one another, all polyether macromonomer structural units of the copolymer K having either side chains with a large number of ether oxygen atoms or alternatively side chains with a small number of ether oxygen atoms, side chains with a large number of ether oxygen atoms being those side chains which in each case have more ether oxygen atoms than the sum of the arithmetic mean of the ether oxygen atoms per side chain of the polyether macromonomer structural units of the copolymer H and the number 4, and side chains with a small number of ether oxygen atoms being those side chains which in each case have fewer ether oxygen atoms than the difference between the arithmetic mean of the ether oxygen atoms per side chain of the polyether macromonomer structural units of the copolymer H and the number 4.

2. Polymer composition according to Claim 1, containing 15 to 80% by weight of a copolymer H and 5 to 40% by weight of a copolymer K.

3. Polymer composition according to Claim 1 or 2, **characterized in that** at least 50 mol% of all structural units of the copolymer H and at least 50 mol% of all structural units of the copolymer K are present in each case in the form of acid monomer structural units.

4. Polymer composition according to any of Claims 1 to 3, **characterized in that** the number of ether oxygen atoms per side chain of the polyether macromonomer structural units of the copolymer H varies in such a way that the corresponding frequency distribution diagram, in which the number of ether oxygen atoms per side chain of a polyether macromonomer structural unit is plotted along the abscissa and the associated frequency for the copolymer H is plotted along the ordinate, contains at least 2 maxima whose abscissa values differ by more than 10 ether oxygen atoms from one another.

5. Polymer composition according to any of Claims 1 to 4, **characterized in that** the number of ether oxygen atoms per side chain of the polyether macromonomer structural units of the copolymer H varies in such a way that the corresponding frequency distribution diagram, in which the number of ether oxygen atoms per side chain of a polyether macromonomer structural unit is plotted along the abscissa and the associated frequency for the copolymer H is plotted along the ordinate, contains at least 2 maxima whose abscissa values differ from one another by more than 10 ether oxygen atoms, all polyether macromonomer structural units of the copolymer K having either side chains with a large number of ether oxygen atoms or alternatively side chains with a small number of ether oxygen atoms, side chains with a large number of ether oxygen atoms being those side chains which in each case have more ether oxygen atoms than the sum of the arithmetic mean of the ether oxygen atoms per side chain of the polyether macromonomer structural units of the copolymer H and the number 10, and side chains with a small number of ether oxygen atoms being those side chains which in each case have fewer ether oxygen atoms than the difference between the arithmetic mean of the ether oxygen atoms per side chain of the polyether macromonomer structural units of the copolymer H and the number 10.

6. Polymer composition according to any of Claims 1 to 5, **characterized in that** the acid monomer structural units of the copolymers H and K are present in each case according to one of the general formulae (Ia), (Ib), (Ic) and/or (Id) 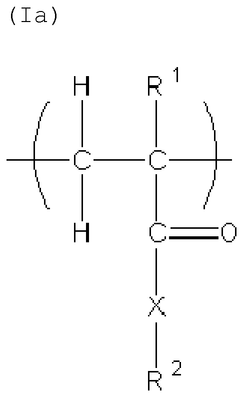 where
R¹ are identical or different and are represented by H and/or a straight-chain or a branched C₁ - C₄ alkyl group;
X are identical or different and are represented by NH-(CₙH₂ₙ) where n = 1, 2, 3 or 4 and/or O-(CₙH₂ₙ) where n = 1, 2, 3 or 4 and/or by a unit not present;
R² are identical or different and are represented by OH, SO₃H, PO₃H₂, O-PO₃H₂ and/or para-substituted C₆H₄-SO₃H, with the proviso that, if X is a unit not present, R² is represented by OH; 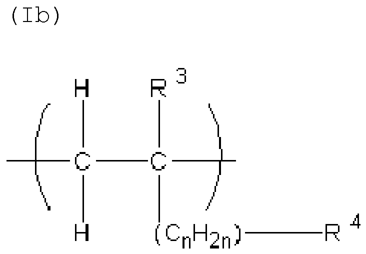
where
R³ are identical or different and are represented by H and/or a straight-chain or branched C₁ - C₄ alkyl group;
n = 0, 1, 2, 3 or 4;
R⁴ are identical or different and are represented by SO₃H, PO₃H₂, O-PO₃H₂ and/or para-substituted C₆H₄-SO₃H; 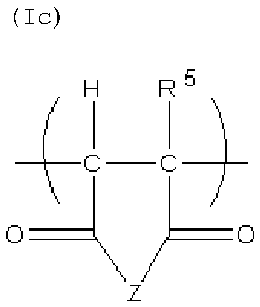
where
R⁵ are identical or different and are represented by H and/or a straight-chain or branched C₁ - C₄ alkyl group;
Z are identical or different and are represented by 0 and/or NH; 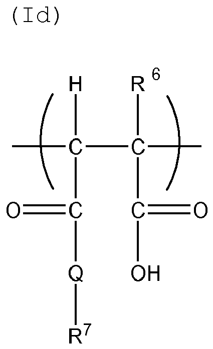
where
R⁶ are identical or different and are represented by H and/or a straight-chain or branched C₁ - C₄ alkyl group;
Q are identical or different and are represented by NH and/or 0;
R⁷ are identical or different and are represented by H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ and/or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 with R⁹ identical or different and represented by a straight-chain or a branched C₁ - C₄ alkyl group.

7. Polymer composition according to any of Claims 1 to 6, **characterized in that** the acid monomer structural units of the copolymers H and K are produced in each case by incorporation of the acid monomers methacrylic acid, acrylic acid, maleic acid, maleic anhydride and/or monoesters of maleic acid in the form of polymerized units.

8. Polymer composition according to any of Claims 1 to 7, **characterized in that** the polyether macromonomer structural units of the copolymers H and K are present in each case according to one of the general formulae (IIa), (IIb) and/or (IIc) 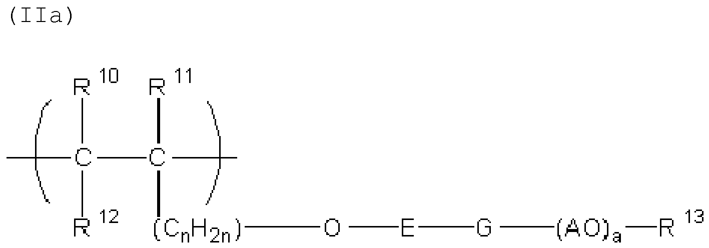 where
R¹⁰, R¹¹ and R¹² in each case are identical or different and, independently of one another, are represented by H and/or a straight-chain or a branched C₁ - C₄ alkyl group;
E are identical or different and are represented by a straight-chain or branched C₁ - C₆ alkylene group, a cyclohexyl group, CH₂-C₆H₁₀, ortho-, meta- or para-substituted C₆H₄ and/or a unit not present;
G are identical or different and are represented by 0, NH and/or CO-NH, with the proviso that, if E is a unit not present, G is also present as a unit not present;
A are identical or different and are represented by CₓH₂ₓ where x = 2, 3, 4 and/or 5, preferably x = 2, and/or CH₂CH(C₆H₅) ;
n are identical or different and are represented by 0, 1, 2, 3, 4 and/or 5;
a are identical or different and are represented by an integer from 5 to 350, preferably 10-200;
R¹³ are identical or different and are represented by H, a straight-chain or a branched C₁ - C₄ alkyl group, CO-NH₂ and/or COCH₃; 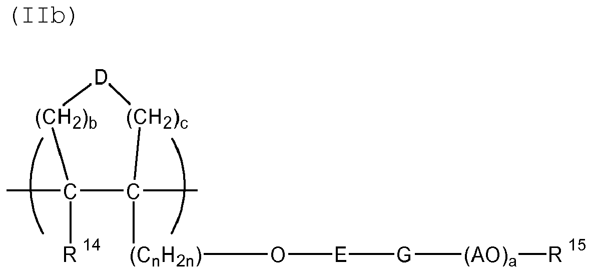
where
R¹⁴ are identical or different and are represented by H and/or a straight-chain or a branched C₁ - C₄ alkyl group;
E are identical or different and are represented by a straight-chain or a branched C₁ - C₆ alkylene group, a cyclohexyl group, CH₂-C₆H₁₀, ortho-, meta- or para-substituted C₆H₄ and/or by a unit not present;
G are identical or different and are represented by a unit not present, 0, NH and/or CO-NH, with the proviso that, if E is a unit not present, G is also present as a unit not present;
A are identical or different and are represented by CₓH₂ₓ where x = 2, 3, 4 and/or 5 and/or CH₂CH(C₆H₅) ;
n are identical or different and are represented by 0, 1, 2, 3, 4 and/or 5;
a are identical or different and are represented by an integer from 5 to 350;
D are identical or different and are represented by a unit not present, NH and/or 0, with the proviso that, if D is a unit not present: b= 0, 1, 2, 3 or 4 and c = 0, 1, 2, 3 or 4, where b + c = 3 or 4, and with the proviso that, if D is NH and/or 0: b = 0, 1, 2 or 3, c = 0, 1, 2 or 3, where b + c = 2 or 3;
R¹⁵ are identical or different and are represented by H, a straight-chain or a branched C₁ - C₄ alkyl group, CO-NH₂, and/or COCH₃; 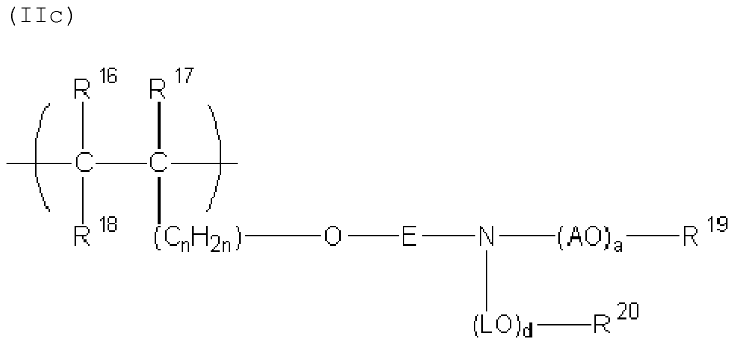
where
R¹⁶, R¹⁷ and R¹⁸ in each case are identical or different and, independently of one another, are represented by H and/or a straight-chain or a branched C₁ - C₄ alkyl group;
E are identical or different and are represented by a straight-chain or a branched C₁ - C₆ alkylene group, a cyclohexyl group, CH₂-C₆H₁₀ and/or ortho-, meta- or para-substituted C₆H₄ ;
A are identical or different and are represented by CₓH₂ₓ where x = 2, 3, 4 and/or 5 and/or CH₂CH(C₆H₅) ;
n are identical or different and are represented by 0, 1, 2, 3, 4 and/or 5;
L are identical or different and are represented by CₓH₂ₓ where x = 2, 3, 4 and/or 5 and/or CH₂-CH(C₆H₅) ;
a are identical or different and are represented by an integer from 5 to 350;
d are identical or different and are represented by an integer from 1 to 350;
R¹⁹ are identical or different and are represented by H and/or a straight-chain or branched C₁ - C₄ alkyl group;
R²⁰ are identical or different and are represented by H and/or a straight-chain C₁ - C₄ alkyl group.

9. Polymer composition according to any of Claims 1 to 8, **characterized in that** the polyether macromonomer structural units of the copolymers H and K are produced in each case by incorporation of the polyether macromonomers alkoxylated hydroxybutyl vinyl ether and/or alkoxylated isoprenol and/or alkoxylated (meth)allyl alcohol and/or vinylated methylpolyalkylene glycol having preferably in each case an arithmetic mean of 6 to 300 oxyalkylene groups in the form of polymerized units.

10. Polymer composition according to any of Claims 1 to 9, **characterized in that** the copolymers H and K have in each case the same or different types of polyether macromonomer structural units and/or acid monomer structural units.

11. Polymer composition according to any of Claims 1, 2 or 4 to 10, **characterized in that** in each case at least 45 mol%, preferably at least 80 mol%, of all structural units of the copolymers H and K are produced by incorporation of acid monomer and polyether macromonomer in the form of polymerized units.

12. Dispersant containing at least 30% by weight of water and at least 10% by weight of the polymer composition according to any of Claims 1 to 11.

13. Dispersant according to Claim 12, which is present in the form of an aqueous solution.

14. Process for the preparation of a polymer composition according to any of Claims 1 to 11 or of a dispersant according to Claim 12 or 13, **characterized in that** the copolymers H and K are each prepared separately from one another in aqueous solution and the separately prepared copolymers or the separately prepared aqueous solutions are then mixed with one another.

15. Process according to Claim 14, **characterized in that** acid monomer and polyether macromonomer are reacted by free radical polymerization with the use of a peroxide-containing redox initiator system in aqueous solution, the temperature of the aqueous solution during the polymerization being 10 to 45°C and the pH being 3.5 to 6.5.

16. Use of a polymer composition according to any of Claims 1 to 11 as a dispersant for hydraulic binders and/or for latent hydraulic binders.

## Revendications

1. Composition polymère contenant 5 à 95 % en poids d'un copolymère H et 2 à 60 % en poids d'un copolymère K, les copolymères H et K comprenant chacun des unités structurales à base de macromonomères de polyéther et des unités structurales à base de monomères acides, qui sont chacune présentes dans les copolymères H et K en un rapport molaire de 1:20 à 1:1, et au moins 20 % en moles de l'ensemble des unités structurales du copolymère H et au moins 25 % en moles de l'ensemble des unités structurales du copolymère K se présentant à chaque fois sous la forme d'unités structurales à base de monomères acides, les unités structurales à base de macromonomères de polyéther du copolymère H comprenant chacune au moins 5 chaînes latérales contenant des atomes d'oxygène éthérés, le nombre d'atomes d'oxygène éthérés par chaîne latérale des unités structurales à base de macromonomères de polyéther du copolymère H variant de manière à ce que le diagramme de distribution de fréquences correspondant, dans lequel le nombre d'atomes d'oxygène éthérés par chaîne latérale d'une unité structurale à base de macromonomères de polyéther est représenté en abscisse et la fréquence correspondante pour le copolymère H est représentée en ordonnée, contienne au moins 2 maxima, dont les valeurs d'abscisse diffèrent l'une de l'autre de plus de 8 atomes d'oxygène éthérés, toutes les unités structurales à base de macromonomères de polyéther du copolymère K comprenant soit des chaînes latérales contenant un nombre élevé d'atomes d'oxygène éthérés, soit en variante des chaînes latérales contenant un faible nombre d'atomes d'oxygène éthérés, les chaînes latérales contenant un nombre élevé d'atomes d'oxygène éthérés étant des chaînes latérales qui comprennent à chaque fois davantage d'atomes d'oxygène éthérés que la somme du nombre moyen arithmétique d'atomes d'oxygène éthérés par chaîne latérale des unités structurales à base de macromonomères de polyéther du copolymère H et du nombre 4, et les chaînes latérales contenant un faible nombre d'atomes d'oxygène éthérés étant des chaînes latérales qui comprennent à chaque fois moins d'atomes d'oxygène éthérés que la différence entre le nombre moyen arithmétique d'atomes d'oxygène éthérés par chaîne latérale des unités structurales à base de macromonomères de polyéther du copolymère H et le nombre 4.

2. Composition polymère selon la revendication 1, contenant 15 à 80 % en poids d'un copolymère H et 5 à 40 % en poids d'un copolymère K.

3. Composition polymère selon la revendication 1 ou 2, **caractérisée en ce qu'**au moins 50 % en moles de l'ensemble des unités structurales du copolymère H et au moins 50 % en moles de l'ensemble des unités structurales du copolymère K se présentent à chaque fois sous la forme d'unités structurales à base de monomères acides.

4. Composition polymère selon l'une quelconque des revendications 1 à 3, **caractérisée en ce que** le nombre d'atomes d'oxygène éthérés par chaîne latérale des unités structurales à base de macromonomères de polyéther du copolymère H varie de manière à ce que le diagramme de distribution de fréquences correspondant, dans lequel le nombre d'atomes d'oxygène éthérés par chaîne latérale d'une unité structurale à base de macromonomères de polyéther est représenté en abscisse et la fréquence correspondante pour le copolymère H est représentée en ordonnée, contienne au moins 2 maxima, dont les valeurs d'abscisse diffèrent l'une de l'autre de plus de 10 atomes d'oxygène éthérés.

5. Composition polymère selon l'une quelconque des revendications 1 à 4, **caractérisée en ce que** le nombre d'atomes d'oxygène éthérés par chaîne latérale des unités structurales à base de macromonomères de polyéther du copolymère H varie de manière à ce que le diagramme de distribution de fréquences correspondant, dans lequel le nombre d'atomes d'oxygène éthérés par chaîne latérale d'une unité structurale à base de macromonomères de polyéther est représenté en abscisse et la fréquence correspondante pour le copolymère H est représentée en ordonnée, contienne au moins 2 maxima, dont les valeurs d'abscisse diffèrent l'une de l'autre de plus de 10 atomes d'oxygène éthérés, toutes les unités structurales à base de macromonomères de polyéther du copolymère K comprenant soit des chaînes latérales contenant un nombre élevé d'atomes d'oxygène éthérés, soit en variante des chaînes latérales contenant un faible nombre d'atomes d'oxygène éthérés, les chaînes latérales contenant un nombre élevé d'atomes d'oxygène éthérés étant des chaînes latérales qui comprennent à chaque fois davantage d'atomes d'oxygène éthérés que la somme du nombre moyen arithmétique d'atomes d'oxygène éthérés par chaîne latérale des unités structurales à base de macromonomères de polyéther du copolymère H et du nombre 10, et les chaînes latérales contenant un faible nombre d'atomes d'oxygène éthérés étant des chaînes latérales qui comprennent à chaque fois moins d'atomes d'oxygène éthérés que la différence entre le nombre moyen arithmétique d'atomes d'oxygène éthérés par chaîne latérale des unités structurales à base de macromonomères de polyéther du copolymère H et le nombre 10.

6. Composition polymère selon l'une quelconque des revendications 1 à 5, **caractérisée en ce que** les unités structurales à base de monomères acides des copolymères H et K se présentent à chaque fois selon l'une quelconque des formules générales (Ia), (Ib), (Ic) et/ou (Id) 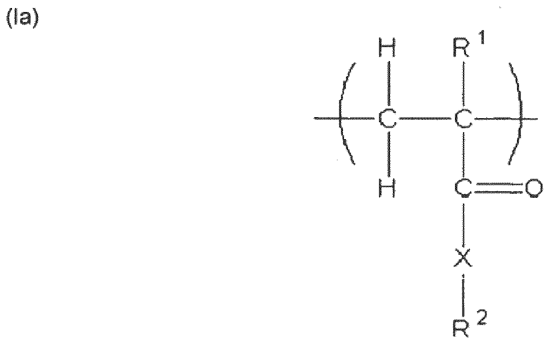 dans laquelle
les R¹ sont identiques ou différents et représentent H et/ou un groupe alkyle en C₁-C₄ non ramifié ou ramifié ; les X sont identiques ou différents et représentent NH-(CₙH₂ₙ) avec n = 1, 2, 3 ou 4 et/ou O-(CₙH₂ₙ) avec n = 1, 2, 3 ou 4 et/ou une unité non présente ;
les R² sont identiques ou différents et représentent OH, SO₃H, PO₃H₂, O-PO₃H₂ et/ou C₆H₄-SO₃H à substitution para, à condition que R² représente OH si X représente une unité non présente ; 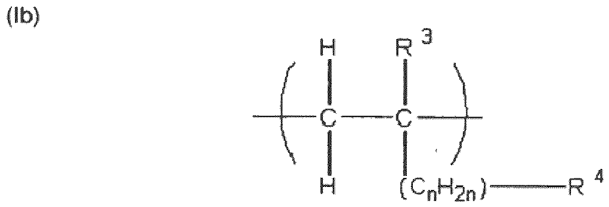
dans laquelle
les R³ sont identiques ou différents et représentent H et/ou un groupe alkyle en C₁-C₄ non ramifié ou ramifié ; n = 0, 1, 2, 3 ou 4,
les R⁴ sont identiques ou différents et représentent SO₃H, PO₃H₂, O-PO₃H₂ et/ou C₆H₄-SO₃H à substitution para ; 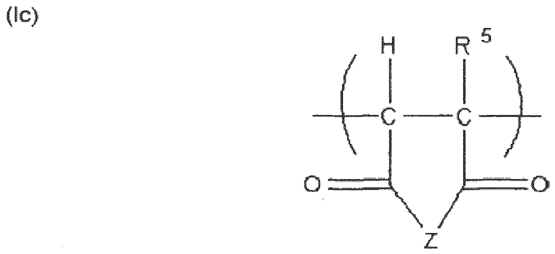
dans laquelle
les R⁵ sont identiques ou différents et représentent H et/ou un groupe alkyle en C₁-C₄ non ramifié ou ramifié ; les Z sont identiques ou différents et représentent O et/ou NH ; 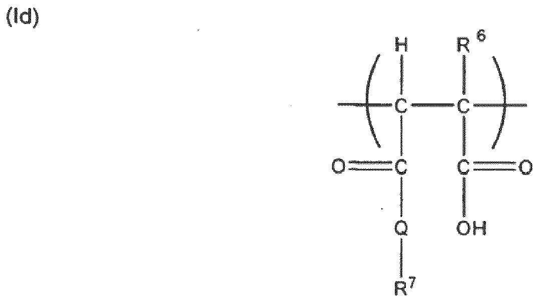
dans laquelle
les R⁶ sont identiques ou différents et représentent H et/ou un groupe alkyle en C₁-C₄ non ramifié ou ramifié ; les Q sont identiques ou différents et représentent NH et/ou O ;
les R⁷ sont identiques ou différents et représentent H, (CₙH₂ₙ)-SO₃H avec n = 0, 1, 2, 3 ou 4, (CₙH₂ₙ)-OH avec n = 0, 1, 2, 3 ou 4, (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350, les R⁹ étant identiques ou différents et représentant un groupe alkyle en C₁-C₄ non ramifié ou ramifié.

7. Composition polymère selon l'une quelconque des revendications 1 à 6, **caractérisée en ce que** les unités structurales à base de monomères acides des copolymères H et K sont chacune formées par copolymérisation des monomères acides acide méthacrylique, acide acrylique, acide maléique, anhydride de l'acide maléique et/ou demi-ester de l'acide maléique.

8. Composition polymère selon l'une quelconque des revendications 1 à 7, **caractérisée en ce que** les unités structurales à base de macromonomères de polyéther des copolymères H et K se présentent chacune selon l'une quelconque des formules générales (IIa), (IIb) et/ou (IIc) 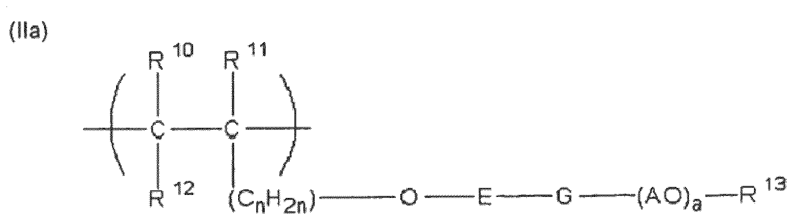 dans laquelle
les R¹⁰, R¹¹ et R¹² sont chacun identiques ou différents et représentent indépendamment les uns des autres H et/ou un groupe alkyle en C₁-C₄ non ramifié ou ramifié ; les E sont identiques ou différents et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les G sont identiques ou différents et représentent O, NH et/ou CO-NH, à condition que G représente également une unité non présente si E est une unité non présente ;
les A sont identiques ou différents et représentent CₓH₂ₓ avec x = 2, 3, 4 et/ou 5, de préférence x = 2, et/ou CH₂CH(C₆H₅) ;
les n sont identiques ou différents et représentent 0, 1, 2, 3, 4 et/ou 5 ;
les a sont identiques ou différents et représentent un nombre entier de 5 à 350, de préférence de 10 à 200 ; les R¹³ sont identiques ou différents et représentent H, un groupe alkyle en C₁-C₄ non ramifié ou ramifié, CO-NH₂ et/ou COCH₃ ; 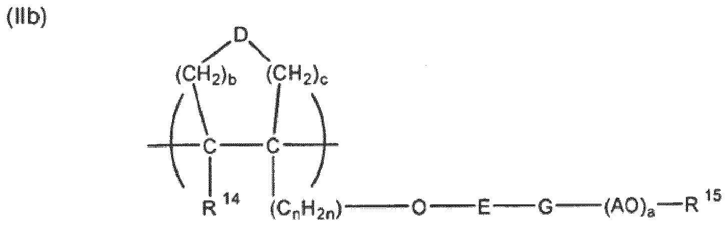
dans laquelle
les R¹⁴ sont identiques ou différents et représentent H et/ou un groupe alkyle en C₁-C₄ non ramifié ou ramifié ; les E sont identiques ou différents et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les G sont identiques ou différents et représentent une unité non présente, O, NH et/ou CO-NH, à condition que G représente également une unité non présente si E est une unité non présente ;
les A sont identiques ou différents et représentent CₓH₂ₓ avec x = 2, 3, 4 et/ou 5, et/ou CH₂CH(C₆H₅) ;
les n sont identiques ou différents et représentent 0, 1, 2, 3, 4 et/ou 5 ;
les a sont identiques ou différents et représentent un nombre entier de 5 à 350 ;
les D sont identiques ou différents et représentent une unité non présente, NH et/ou O, à condition que si D est une unité non présente : b = 0, 1, 2, 3 ou 4 et c = 0, 1, 2, 3 ou 4, avec b + c = 3 ou 4, et à condition que lorsque D représente NH et/ou O : b = 0, 1, 2 ou 3, c = 0, 1, 2 ou 3, avec b + c = 2 ou 3 ;
les R¹⁵ sont identiques ou différents et représentent H, un groupe alkyle en C₁-C₄ non ramifié ou ramifié, CO-NH₂ et/ou COCH₃ ; 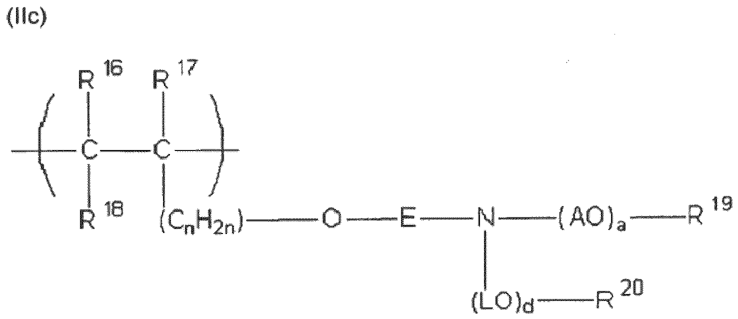
dans laquelle
les R¹⁶, R¹⁷ et R¹⁸ sont chacun identiques ou différents et représentent indépendamment les uns des autres H et/ou un groupe alkyle en C₁-C₄ non ramifié ou ramifié ; les E sont identiques ou différents et représentent un groupe alkylène en C₁-C₆ non ramifié ou ramifié, un groupe cyclohexyle, CH₂-C₆H₁₀ et/ou C₆H₄ à substitution ortho, méta ou para ;
les A sont identiques ou différents et représentent CₓH₂ₓ avec x = 2, 3, 4 et/ou 5, et/ou CH₂CH(C₆H₅) ;
les n sont identiques ou différents et représentent 0, 1, 2, 3, 4 et/ou 5 ;
les L sont identiques ou différents et représentent CₓH₂ₓ avec x = 2, 3, 4 et/ou 5, et/ou CH₂-CH(C₆H₅) ;
les a sont identiques ou différents et représentent un nombre entier de 5 à 350 ;
les d sont identiques ou différents et représentent un nombre entier de 1 à 350 ;
les R¹⁹ sont identiques ou différents et représentent H et/ou un groupe alkyle en C₁-C₄ non ramifié ou ramifié,
les R²⁰ sont identiques ou différents et représentent H et/ou un groupe alkyle en C₁-C₄ non ramifié.

9. Composition polymère selon l'une quelconque des revendications 1 à 8, **caractérisée en ce que** les unités structurales à base de macromonomères de polyéther des copolymères H et K sont chacune formées par copolymérisation des macromonomères de polyéther éther d'hydroxybutylvinyle alcoxylé et/ou isoprénol alcoxylé et/ou alcool (méth)allylique alcoxylé et/ou méthylpolyalkylène glycol vinylé contenant de préférence chacun un nombre moyen arithmétique de groupes oxyalkylène de 6 à 300.

10. Composition polymère selon l'une quelconque des revendications 1 à 9, **caractérisée en ce que** les copolymères H et K comprennent chacun des types identiques ou différents d'unités structurales à base de macromonomères de polyéther et/ou d'unités structurales à base de monomères acides.

11. Composition polymère selon l'une quelconque des revendications 1, 2 ou 4 à 10, **caractérisée en ce qu'**à chaque fois au moins 45 % en moles, de préférence au moins 80 % en moles, de toutes les unités structurales des copolymères H et K sont formées par copolymérisation d'un monomère acide et d'un macromonomère de polyéther.

12. Dispersant contenant au moins 30 % en poids d'eau et au moins 10 % en poids de la composition polymère selon l'une quelconque des revendications 1 à 11.

13. Dispersant selon la revendication 12, qui se présente sous la forme d'une solution aqueuse.

14. Procédé de fabrication d'une composition polymère selon l'une quelconque des revendications 1 à 11 ou d'un dispersant selon la revendication 12 ou 13, **caractérisé en ce que** les copolymères H et K sont fabriqués chacun séparément l'un de l'autre dans une solution aqueuse, puis les copolymères fabriqués séparément ou les solutions aqueuses fabriquées séparément sont mélangé(e)s les un(e)s avec les autres.

15. Procédé selon la revendication 14, **caractérisé en ce qu'**un monomère acide et un macromonomère de polyéther sont mis en réaction en solution aqueuse par polymérisation radicalaire en utilisant un système d'initiateur redox contenant un peroxyde, la température de la solution aqueuse pendant la polymérisation étant de 10 à 45 °C et le pH étant de 3,5 à 6,5.

16. Utilisation d'une composition polymère selon l'une quelconque des revendications 1 à 11 en tant que dispersant pour liants hydrauliques et/ou pour liants hydrauliques latents.
